# EUROPÄISCHE PATENTANMELDUNG

(11) **EP 2 141 366 A2**
(43) Veröffentlichungstag der Anmeldung: **06.01.2010**
(21) Anmeldenummer: 09163068.1
(22) Anmeldetag: 18.06.2009
(51) Int. Cl.: F16B 19/02

(54) **Ausgestaltung einer Niete**

(30) Priorität: 03.07.2008 DE 102008040127
(71) Anmelder: ZF Friedrichshafen AG, 88038 Friedrichshafen (DE)
(72) Erfinder: Männer, Andreas, 88682, Salem (DE)

(57) **Zusammenfassung**

Es wird eine Ausgestaltung einer Niete umfassend einen Setzkopf (10), einen Schaft (2) und einen Schließkopf (11) vorgeschlagen, bei der die Niete im Bereich des Schaftes (2) einen rechteckigen, polygonförmigen bzw. abgeflachten Querschnitt aufweist.

## Beschreibung

Die vorliegende Erfindung bezieht sich auf die Ausgestaltung einer Niete gemäß dem Oberbegriff des Patentanspruchs 1.

Aus dem Stand der Technik ist bekannt, in Schaltgetrieben umfassend ein Schaltschienen- bzw. Schubstangenpaket die Schaltschienen- bzw. Schubstangen unter Verwendung von Fügetechniken wie Nieten oder Schweißen zu Paketen zu verbinden.

Hierbei werden runde Nietstifte oder Bolzen in vielerlei Variationen eingesetzt, welche durch spanende Bearbeitung ihre endgültige Kontur erhalten, bevor sie im Rahmen eines weiteren Arbeitsganges gefügt werden.

Aus der DE 60025300 T2 ist eine schwimmende Bremsscheibenanordnung bekannt, mit einer Nabe, einer rohrförmigen Scheibe, die konzentrisch um die Nabe mit einem Freiraum zwischen diesen angeordnet ist, wobei die Nabe und die Scheibe eine Mehrzahl an Einsetzbohrungen haben und ein Hohlboizen aus Metall in jede der Einsetzbohrungen mit einer an einem Endabschnitt des Hohlbolzens aufgesetzten Unterlegscheibe eingesetzt ist, wobei er daran anschließend radial nach außen verstemmt ist, um die Unterlegscheibe in einer Position zu befestigen.

Hierbei weisen die Nabe und die Scheibe mehrere Sätze von halbkreisförmigen Verbindungszähnen auf, die sich zu dem Freiraum öffnen, um dadurch die jeweiligen Einsetzbohrungen zu bilden; des weiteren ist der Endabschnitt des Hohlbolzens radial nach außen durch Rolliermittel verstemmt und in einem Durchmesserabschnitt des Endabschnitts lediglich geringfügig durch Verstemmen des Hohlbolzens expandiert, wobei sich die Expansion nicht über den Außendurchmesser des Bolzenschaftes erstreckt. Ferner weist der Hohlbolzen eine oberflächenbearbeitete Schicht auf und ist in einer gerundeten oder konvexen Bogengestalt in seinem äußeren Teil des Innenumfangs des Endabschnitts geformt. Die Schicht ist vorzugsweise ein korrosionsbeständiger Belag und kann aus Chrom oder Nickel hergestellt sein.

Aus der DE 199 22246 B4 ist eine Befestigungsanordnung bestehend aus Werkstücken mit Öffnungen bekannt, umfassend einen rohrförmigen Niet, welcher durch die Öffnung in den Werkstücken hindurchgeführt ist, wobei der Niet einen Schaft aufweist, welcher in seinem freien Endbereich rohrförmig und im übrigen als Vollquerschnitt ausgebildet ist und nach außen gerollt ist, um einen Toroid zu bilden, bei dem Material, welches sich vor der Verformung ursprünglich an einer Innenoberflächen des rohrförmig Endbereiches des Schaftes befunden hat, an einer Außenoberfläche des Toroids vorhanden ist und in Kontakt mit dem Werkstück gelangt, und bei dem Material, welches sich vor der Verformung ursprünglich an einer Außenoberfläche des rohrförmigen Endbereiches des Schaftes befunden hat, an einer Innenoberfläche des Toroids vorhanden ist und von dem Werkstück beabstandet ist.

Der vorliegenden Erfindung liegt die Aufgabe zugrunde, eine Ausgestaltung einer Niete anzugeben, durch die die Verbindung und Führung von Bauteilen, beispielsweise von Schaltschienen- bzw. Schubstangen kostengünstig erfolgt.

Zudem sollen die aus dem Stand der Technik bekannten Fertigungsverfahren eingesetzt werden können, wobei die Notwendigkeit einer spanenden Bearbeitung reduziert werden bzw. entfallen soll. Ein weiteres Ziel der Erfindung ist es, den Aufwand zur Wärmbehandlung angrenzender Bauteile weitgehend zu verringern.

Diese Aufgabe wird durch die Merkmale des Patentanspruchs 1 gelöst Weitere erfindungsgemäße Ausgestaltungen und Vorteile gehen aus den Unteransprüchen hervor.

Demnach wird eine Niete umfassend einen Setzkopf, einen Schaft und einen Schließkopf vorgeschlagen, bei der zumindest der Schaft einen rechteckigen, polygonförmigen bzw. abgeflachten Querschnitt aufweist.

Gemäß einer ersten Ausführungsform der Erfindung wird eine Ausgestaltung einer Niete umfassend einen Setzkopf, einen Schaft und einen Schließkopf vorgeschlagen, bei der die Niete als Flachniete ausgeführt ist, welche im Bereich des Schaftes, des Setzkopfes und des Schließkopfes einen rechteckigen, polygonförmigen bzw. abgeflachten Querschnitt aufweist.

Gemäß einer weiteren Ausgestaltung der Erfindung ist die Niete als Profilniete ausgeführt, welche im Bereich des Schaftes einen rechteckigen, polygonförmigen bzw. abgeflachten Querschnitt aufweist, wobei der Setzkopf und/oder der Schließkopf einen runden Querschnitt aufweisen.

Hierbei wird durch die Geometrie des Setzkopfes der Profil- oder Flachniete die Positionierung der verdrehsicher miteinander zu verbindenden Bauteile, die beispielsweise Schaltschienen oder Schubstangen sein können, ermöglicht.

Gemäß einer vorteilhaften Weiterbildung der Erfindung kann die Geometrie des Setzkopfes derart gestaltet sein, dass zusätzliche Sicherungselemente wie beispielsweise Sicherungsringe anbringbar sind, wobei auf eine Sicherung gegen Verdrehen der betreffenden Bauteile zu achten ist.

Um zusätzliche Vorteile in Bezug auf Verschleiß und Reibwertoptimierung zu erreichen, wird im Rahmen einer Weiterbildung der Erfindung vorgeschlagen, die Profilniete oder Flachniete im Bereich der Führungsgeometrie d.h. des Schaftes bzw. der Kontaktflächen zu anderen Bauteilen mit einer Beschichtung zu versehen. Dies kann mittels aller gängigen Oberflächenbeschichtungsverfahren, durch Umspritzen mit Kunststoff oder durch Sintern erfolgen.

In vorteilhafter Weise kann eine erfindungsgemäß ausgestaltete Flach-oder Profilniete als Verbindungs- und Führungselement in einem Schaltschienen- bzw. Schubstangenpaket verwendet werden, wobei sich dadurch der Vorteil ergibt, dass das Schaltschienen- bzw. Schubstangenpaket flächig aufliegen kann, was eine Reduzierung der Pressung zum angrenzenden Bauteil zur Folge hat.

Bei Rundnieten entsteht dahingegen der Nachteil, da es lediglich zu einer Linienberührung kommt, wodurch die Pressung auf angrenzende Bauteile sehr stark erhöht wird. Durch die Paketbildung der Schaltschienen bzw. Schubstangen wird zudem die Montage vereinfacht.

Durch die erfindungsgemäße Konzeption kann bei Verwendung einer Profilniete oder Flachniete im Rahmen der werkstoffbedingten Festigkeit auf die Wärmebehandlung und das Härten der Führungen der zu verbindenden Bauteile, beispielsweise eines Schaltschienen- bzw. Schubstangenpakets verzichtet werden, was zu einer weiteren Reduzierung der Herstellungskosten führt.

Eine Profilniete bzw. Flachniete kann in vorteilhafter Weise mittels herkömmlicher Formgebungs- bzw. Fertigungsverfahren, ohne die Notwendigkeit einer nachfolgenden spanenden Bearbeitung, hergestellt werden

Beispielsweise können die erfindungsgemäßen Profil- bzw. Flachnieten mittels Zieh-, Strangguss-, Schmiede-, Stanz- oder Sinterverfahren hergestellt werden. Ferner ist eine Herstellung mittels Wasserstrahl -, Elektronenstrahl-oder Laserstrahl- Schneideverfahren sowie mittels Erodierverfahren möglich.

Die Erfindung wird im Folgenden anhand der beigefügten Zeichnung beispielhaft näher erläutert. Es zeigen:
- Fig. 1:: Schematische Ansichten von erfindungsgemäßen Querschnitten einer Profil- oder Flachniete im Bereich des Schaftes;
- Fig. 2:: Eine schematische perspektivische Ansicht einer Flachniete, welche im Bereich des Schaftes einen rechteckigen Querschnitt aufweist;
- Fig. 3:: Eine schematische zweidimensionale Darstellung einer erfindungsgemäß ausgeführten Flachniete in einem Schaltschlenenpaket;
- Fig. 4:: Eine schematische perspektivische Ansicht einer Profilniete, welche im Bereich des Schaftes einen rechteckigen Querschnitt aufweist;
- Fig. 5:: Eine schematische perspektivische Ansicht einer Profilniete, welche im Bereich des Schaftes einen rechteckigen Querschnitt und im Kopfbereich einen Sicherungsring aufweist;
- Fig. 6:: Eine schematische zweidimensionale Darstellung einer erfindungsgemäß ausgeführten Profilniete in einem Schaltschienenpaket;

- Fig 7:: Eine schematische perspektivische Ansicht einer Profilniete, welche im Bereich des Schaftes bzw. der Kontaktflächen zu anderen Bauteilen eine Beschichtung aufweist, und
- Fig. 8:: Eine schematische Schnittansicht des Schaftes der in Fig. 7 gezeigten Profilniete.

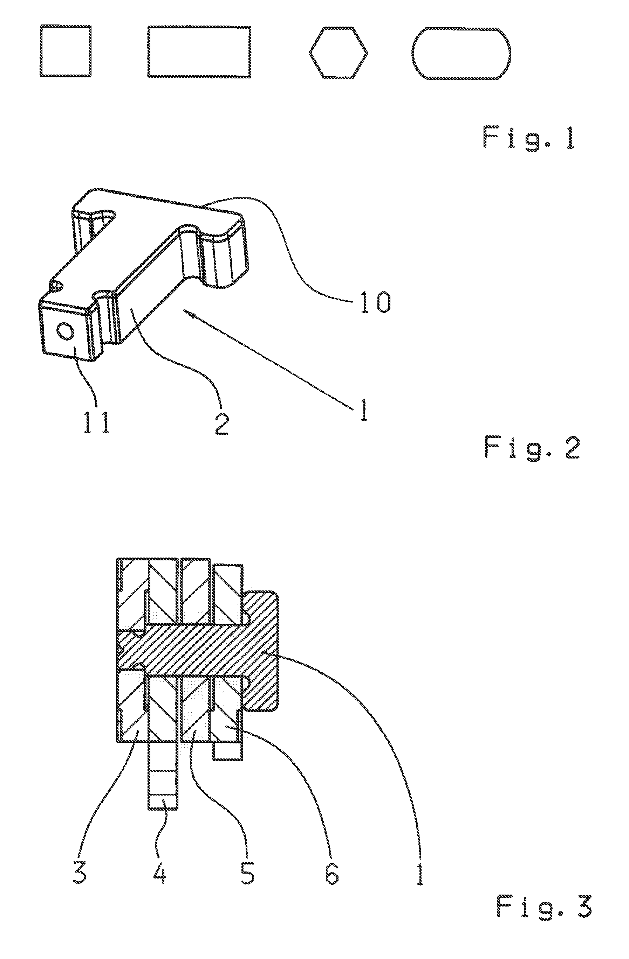

Gemäß der Erfindung und bezugnehmend auf Fig. 1 kann weist eine Niete im Bereich des Schaftes einen rechteckigen, polygonförmigen bzw. abgeflachten Querschnitt auf. Des weiteren ist die Kopfgeometrie der Profil- oder Flachniete derart gestaltet, dass sie die Positionierung der miteinander zu verbindenden Bauteile ermöglicht.

Beispielsweise ist in Fig. 2 eine Flachniete 1 dargestellt, bei der der Schaft 2, der Setzkopf 10 und der Schließkopf 11 einen rechteckigen Querschnitt aufweisen. In Fig. 3 ist die Flachniete 1 in einem Schaltschienenpaket umfassend Schaltschienen 3, 4, 5, 6 dargestellt.

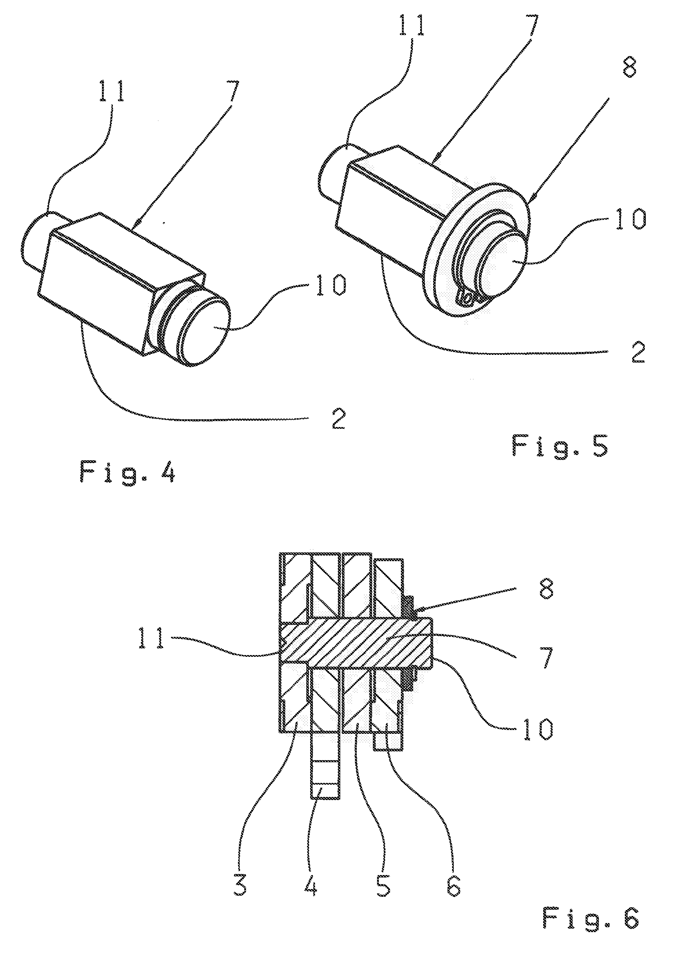

In Fig. 4 ist eine Profilniete 7 gezeigt, welche im Bereich des Schaftes 2 einen rechteckigen Querschnitt aufweist, wobei der Setzkopf 10 und der Schließkopf 11 einen runden Querschnitt aufweisen; gemäß der Erfindung kann eine Flach- oder Profilniete im Kopfbereich Sicherungselemente wie beispielsweise Sicherungsringe aufweisen, wie anhand Fig. 5 erläutert; mit dem Bezugszeichen 8 ist hierbei ein Sicherungselement bezeichnet.

Gegenstand der Fig. 6 ist eine gemäß Fig. 6 ausgeführte Profilniete 7, welche in einem Schaltschienenpaket umfassend Schaltschienen 3, 4, 5, 6 geführt ist.

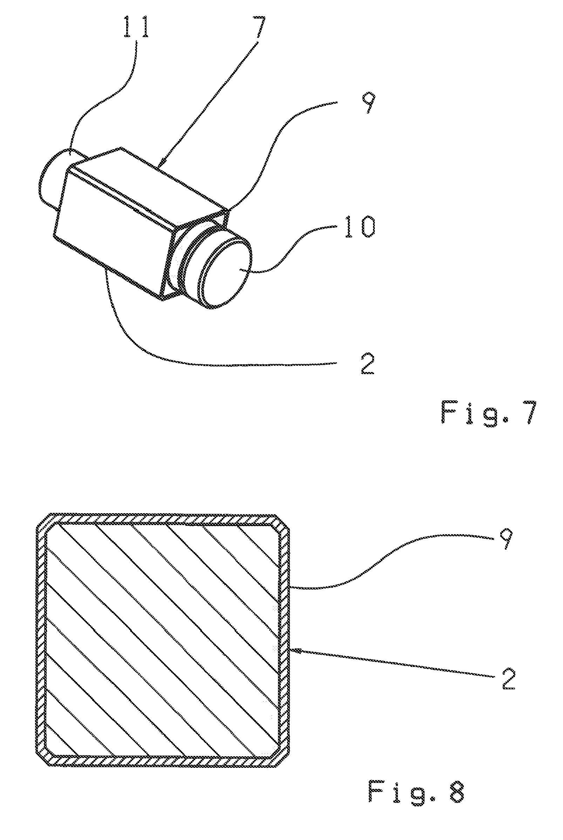

Gemäß einer weiteren Ausgestaltung der Erfindung, die Gegenstand der Fig. 7 und 8 ist, kann eine Flachniete oder Profilniete 7 im Bereich der Führungsgeometrie d.h. des Schaftes 2 bzw. der Kontaktflächen zu anderen Bauteilen mit einer Beschichtung 9 versehen sein, beispielsweise mit einer Kunststoffbeschichtung. Durch die Beschichtung wird der Reibwert optimiert und der Verschleiß minimiert.

Die erfindungsgemäß ausgeführten Nieten können in vorteilhafter Weise in Getrieben eingesetzt werden, um Bauteile, wie beispielsweise Schaltschienen oder Schubgabeln miteinander zu verbinden.

### Bezugszeichen

- 1: Flachniete
- 2: Schaft
- 3: Schaltschiene
- 4: Schaltschiene
- 5: Schaltschiene
- 6: Schaltschiene
- 7: Profilniete
- 8: Sicherungseinrichtung
- 9: Beschichtung
- 10: Setzkopf
- 11: Schließkopf

## Patentansprüche

1. Ausgestaltung einer Niete umfassend einen Setzkopf (10), einen Schaft (2) und einen Schließkopf (11), **dadurch gekennzeichnet, dass** die Niete im Bereich des Schaftes (2) einen rechteckigen, polygonförmigen bzw. abgeflachten Querschnitt aufweist.

2. Ausgestaltung einer Niete umfassend einen Setzkopf (10), einen Schaft (2) und einen Schließkopf (11), nach Anspruch 1, **dadurch gekennzeichnet, dass** die Niete als Flachniete (1) ausgeführt ist, bei der der Setzkopf (10) und der Schließkopf (11) einen rechteckigen, polygonförmigen bzw. abgeflachten Querschnitt aufweisen.

3. Ausgestaltung einer Niete umfassend einen Setzkopf (10), einen Schaft (2) und einen Schließkopf (11), nach Anspruch 1, **dadurch gekennzeichnet, dass** die Niete als Profilniete (7) ausgeführt ist, bei der der Setzkopf (10) und/oder der Schließkopf (11) einen runden Querschnitt aufweisen.

4. Ausgestaltung einer Niete umfassend einen Setzkopf (10), einen Schaft (2) und einen Schließkopf (11), nach Anspruch 1, 2 oder 3, **dadurch gekennzeichnet, dass** die Geometrie des Setzkopfes (10) derart gestaltet ist, dass zusätzliche Sicherungselemente (8) anbringbar sind.

5. Ausgestaltung einer Niete umfassend einen Setzkopf (10), einen Schaft (2) und einen Schließkopf (11), nach einem der vorangehenden Ansprüche, **dadurch gekennzeichnet, dass** die Niete (1, 7) im Bereich des Schaftes (2) mit einer Beschichtung (9) versehen ist.

6. Ausgestaltung einer Niete umfassend einen Setzkopf (10), einen Schaft (2) und einen Schließkopf (11), nach Anspruch 5, **dadurch gekennzeichnet, dass** die Beschichtung (9) mittels gängiger Oberflächenbeschichtungsverfahren, durch Umspritzen mit Kunststoff oder durch Sintern erzeugt wird.

7. Ausgestaltung einer Niete umfassend einen Setzkopf (10), einen Schaft (2) und einen Schließkopf (11), nach einem der vorangehenden Ansprüche, **dadurch gekennzeichnet, dass** die Niete (1, 7) mittels Zieh-, Strangguss-, Schmiede-, Stanz- oder Sinterverfahren herstellbar ist.

8. Ausgestaltung einer Niete umfassend einen Setzkopf (10), einen Schaft (2) und einen Schließkopf (11), nach einem der vorangehenden Ansprüche 1 bis 6, **dadurch gekennzeichnet, dass** die Niete (1, 7) mittels Wasserstrahl, Elektronenstrahl- oder Laserstrahl- Schneideverfahren oder mittels Erodierverfahren herstellbar ist.
